# EUROPEAN PATENT APPLICATION

(11) **EP 1 676 679 A2**
(43) Date of publication of application: **05.07.2006**
(21) Application number: 05027674.0
(22) Date of filing: 16.12.2005
(51) Int. Cl.: B25J 9/16, G05B 19/408

(54) **Robot controller for correcting a target position of a robot hand by means of a visual sensor**

(30) Priority: 21.12.2004 JP 2004368977
(71) Applicant: FANUC LTD, Minamitsuru-gun, Yamanashi 401-0597 (JP)
(72) Inventor: Akiyama, Kazuhiko, Oshino-mura, Minamimitsuru-gun Yamanashi (JP); Kobayashi, Hirohiko, Fujiyoshida-shi Yamanashi 403-0004 (JP)
(74) Representative: Thum, Bernhard

(57) **Abstract**

A robot controller (16) is disclosed in which a specific target position is predetermined in order to define approaching and leaving paths for a robot hand (14), and a plurality of different path patterns (PT1-PT4) are stored in a path pattern storage means (20) as the approaching and leaving paths along which the robot hand (14) approaches and leaves the predetermined specific target position. Next, based on a workpiece position detected by a visual sensor (18), one of the path patterns (PT1-PT4) stored in the path pattern storage means (20) is selected, and the selected path pattern is modified so that the target position of the robot hand (14) is coincident with the actual workpiece position. The modified path pattern is defined as revised approaching and leaving paths and the robot hand (14) is moved along the revised approaching and leaving paths.

## Description

### BACKGROUND OF THE INVENTION

### 1. Field of the Invention

The present invention relates to a robot controller which can correct a target position of a robot hand based on a position of a workpiece detected by a visual sensor to thereby move the robot hand toward or away from the workpiece.

### 2. Description of the Related Art

In a robot system, a reference position is determined in advance, and it is required to teach a path along which the robot hand moves toward or away from the workpiece to thereby control the operation of the robot hand (i.e. a approaching path or a leaving path), on the assumption that the workpiece is arranged at the reference position. The teaching of the path is performed either directly by making the robot hand move along the path or indirectly by designating a start point, a via-point and an end point of the path and determining the trajectory between them by interpolation.

However, it is actually difficult to arrange the workpiece accurately at the reference position, and the workpiece is often placed away from the reference position. Therefore, in order to move the robot hand to the actual workpiece position where the workpiece is actually placed, the robot system must be provided with a visual sensor or the like to detect the displacement between the actual workpiece position and the reference position and correct the target position (i.e. the end point of the approaching path or the start point of the leaving path) among the taught points on the movement path of the robot hand. On the other hand, the movement path of the robot hand is required to be defined such that the robot hand or the workpiece held by the robot hand may not interfere with other objects. Therefore, a common path where the robot hand or the workpiece held by the robot hand cannot interfere with other objects is defined in advance, and the robot hand is moved to a specific point along this common path regardless of the actual workpiece position, after which the robot hand departs from the specific path at the specific point to move to the corrected target position.

In the prior art, as described above, the robot hand is moved to the specific point along the common path regardless of the actual workpiece position (i.e. the corrected target position) and then from the specific point to the workpiece position. Therefore, in the case where the workpiece is arranged at a position in some range, the robot hand is moved along an indirect movement path. As a result, a wastful operation of the robot hand occurs, which lengthens the cycle time.

### SUMMARY OF THE INVENTION

Accordingly, an object of the present invention is to solve the problem of the prior art described above and to move the robot hand along one of predetermined paths selected depending on the actual workpiece position to thereby reduce the cycle time of the robot hand operation.

In order to achieve this object, according to the present invention, there is provided a robot controller for correcting a target position of a robot hand based on a position of a workpiece detected by a visual sensor to thereby move the robot hand toward or away from the workpiece, which includes a path pattern storage means for storing a plurality of path patterns including an approaching path along which the robot hand approaches a specific target position and a leaving paths along which the robot hand leaves the specific target position, the specific target position being predetermined in order to define the approaching path and the leaving path for the robot hand, wherein the robot controller selects one of the plurality of path patterns stored in the path pattern storage means, based on the position of the workpiece detected by the visual sensor, modifies the selected path pattern so that the target position of the robot hand is coincident with the position of the workpiece detected by the visual sensor, defining the modified path pattern as revised approaching and leaving paths, and moves the robot hand along the revised approaching and leaving paths.

In the robot controller according to the present invention, the approaching and leaving paths are selected from the plurality of the path patterns stored in advance in the path pattern storage means, depending on the position at which the workpiece is actually arranged, and the approaching and leaving paths are modified by correcting a specific target position of the selected path pattern predetermined in order to define a path pattern, so that the target position of the robot hand is coincident with the actual workpiece position. As a result, the respective path patterns suitable for the workpieces arranged in respective areas can be stored in advance in the path pattern storage means, and the path pattern, in which a wastful operation of the robot hand can be reduced while at the same time avoiding the interference between the robot hand and other objects, can be easily defined depending on the actual workpiece position.

In one embodiment, the robot controller defines, as the revised approaching path and the revised leaving path, the selected path pattern moved in parallel so that the target position of the robot hand is coincident with the position of the workpiece detected by the visual sensor.

Preferably, a range in which the workpiece is allowed to be placed is divided into a plurality of areas, and the path pattern is selected depending on in which of the plurality of areas the position of the workpiece detected by the visual sensor is included.

In the case where the approaching path is not required to be different from the leaving path, the approaching path and the leaving path for one workpiece may be identical.

When at least one of the coordinate values of the position of the workpiece detected by the visual sensor exceeds a predetermined threshold value, the robot controller preferably issues an alarm and stops the operation of the robot hand.

The approaching path and the leaving path may be defined by designating a start point and an end point and connecting the starting and end points by interpolation, or by designating a start point, an end point and at least one via-point between the starting and end points and by connecting the designated points by interpolation.

Also, the position of the workpiece detected by the visual sensor may be represented as a position of the workpiece relative to a predetermined reference position or as a position of the workpiece in an absolute coordinate system.

### BRIEF DESCRIPTION OF THE DRAWINGS

The above and other objects, features and advantages of the present invention will be described in more detail below based on the preferred embodiments of the present invention with reference to the accompanying drawings, wherein:
Fig. 1 is a diagram showing an overall configuration of a robot system having a robot controller according to the present invention;
Fig. 2 is a flowchart of a process executed in the robot controller according to the present invention; and
Fig. 3 is a diagram for illustrating respective path patterns related to respective divided areas in a workpiece placement range in a path pattern storage means of the robot controller according to the present invention.

### DETAILED DESCRIPTION

A preferred embodiment of the present invention will be described below with reference to the drawings.

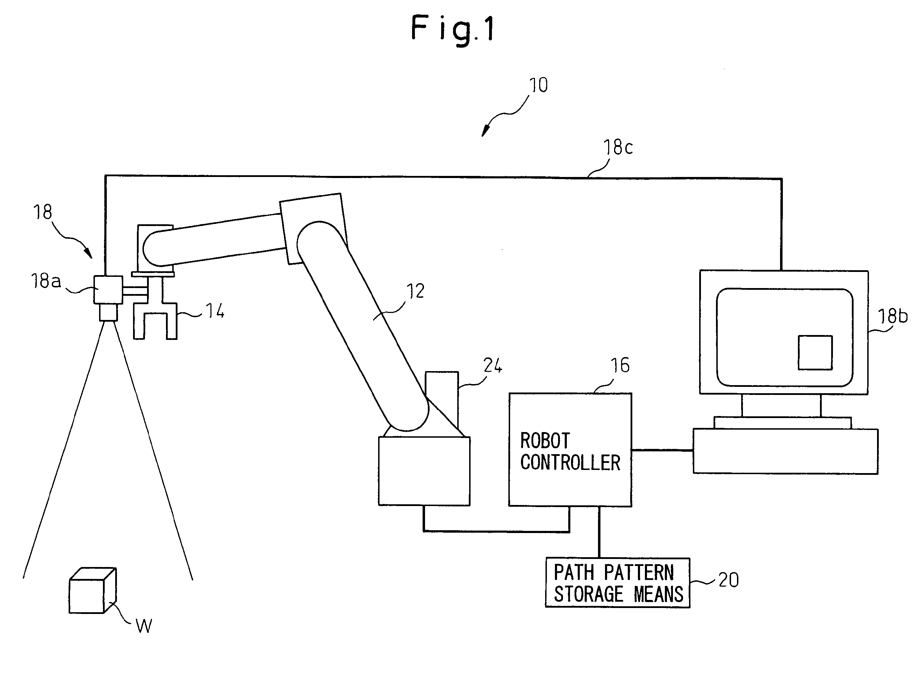

First, with reference to Fig. 1, an overall configuration of a robot system 10 using a robot controller 16 according to the present invention will be described. The robot system 10 includes a robot arm 12, a robot hand 14 mounted at the forward end of the robot arm 12, a robot controller 16 for controlling the operation of the robot arm 12 and the robot hand 14, a visual sensor 18 for detecting a position of a workpiece W, and a path pattern storage means 20 for storing a plurality path patterns therein. The robot hand 14 is caused to approach a workpiece W placed on a wokpiece placement surface 22 such a conveyor or workpiece table, and the workpiece W is held by the robot hand 14 and then carried to another place.

The robot arm 12 is of a known type and is configured to be able to move the robot hand 14 to a predetermined position based on an operation command from the robot controller 16. The robot hand 14 is of a known type capable of holding the workpiece W by grasping or suction, and can turn in an arbitrary direction with respect to the robot arm 12, based on an operation command from the robot controller 16.

The visual sensor 18 is of a type capable of three-dimensional measurement, and includes an imaging unit 18a arranged in juxtaposition with the robot hand 14 and an image processing unit 18b for processing image information obtained from the imaging unit 18a. For example, a stereo type using two CCD cameras can be used as the imaging unit 18a. The imaging unit 18a is connected to the image processing unit 18b by a signal transmission means 18c such as a signal cable. The signal processing unit 18b processes the signal such as a video signal obtained from the imaging unit 18a to conduct the three-dimensional measurement and thus detect the position of the workpiece W placed on the workpiece placement surface 22. The positional information of the workpiece W can be obtained either by measuring the coordinates in an absolute coordinate system or by measuring the coordinates relative to a predetermined reference point. In the latter case, for example, the actual position of the workpiece W relative to a virtual workpiece W0 arranged at a predetermined reference position O on the workpiece placement surface 22 may be measured.

The robot controller 16 is of well-known widely-used type, and a main board thereof has a CPU, a ROM, a RAM, a nonvolatile RAM, etc. The ROM has stored therein a system software for controlling the robot arm 12 and the robot hand 14. This system software is normally copied to the RAM and executed by the CPU. Also, a robot program (operation program) including operation commands prepared by the user is stored in the nonvolatile RAM. This robot program is also normally copied to the RAM and executed by the CPU. The main board of the robot controller 16 is connected to a servo motor 24 for driving the robot arm through a servo amplifier and to signal lines for an encoder of the servo motor 24 and other I/O signal (external input/output signal). Further, the robot controller 16 may be connected to a teaching operation panel (not shown) having a display through an input/output interface for teaching operation panel.

The path pattern storage means 20 is configured of a storage unit such as a memory or RAM and normally forms a part of the robot controller 16.

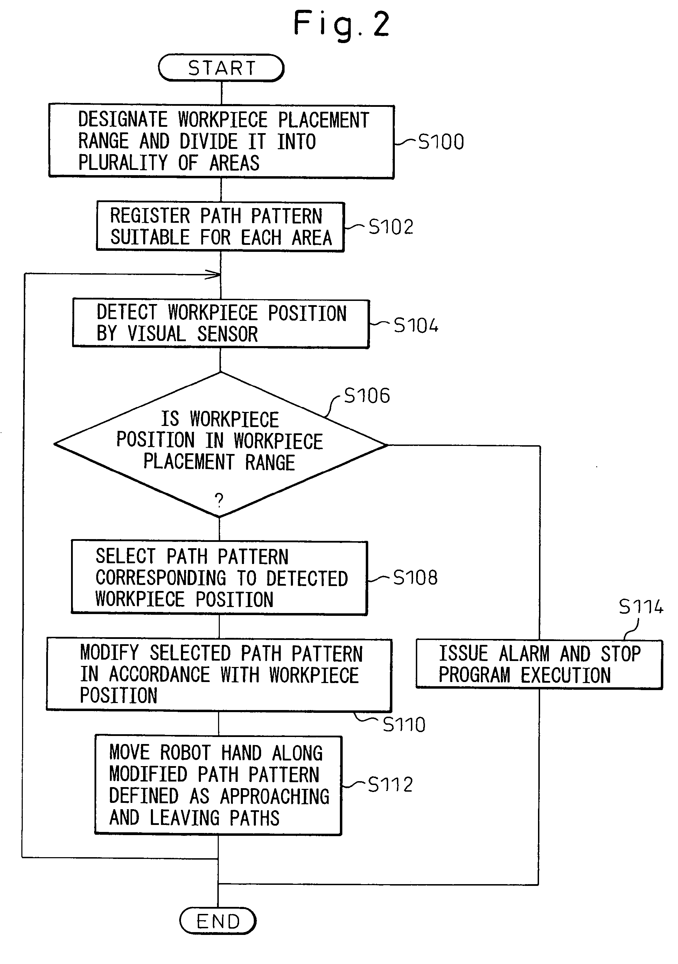

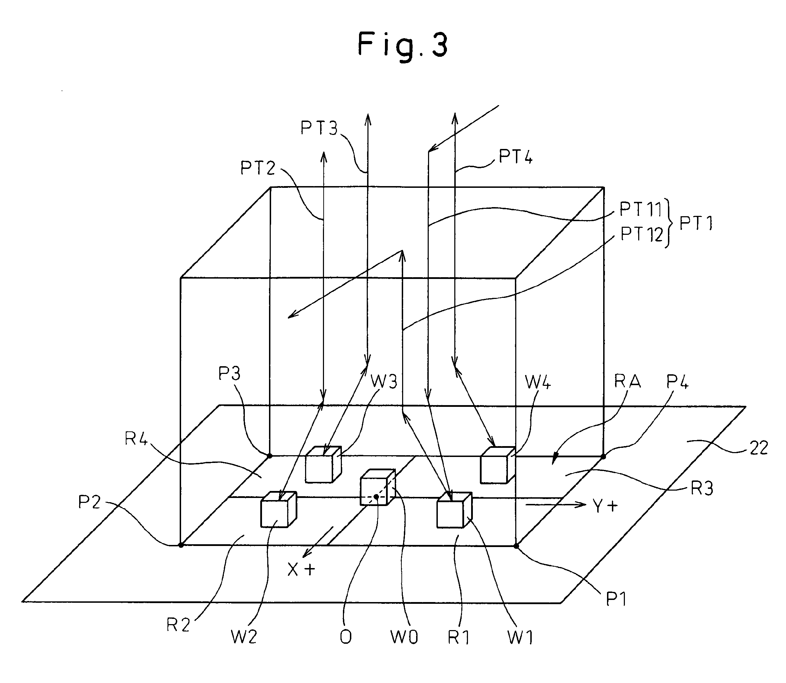

Next, with reference to Fig. 2, a robot controlling process executed in the robot controller 16 will be described. First, a workpiece placement range RA in which the workpiece W is allowed to be placed is designated, and divided into a plurality of areas R1 to R4 (step S100). For example, in the case where the workpiece placement range RA is a flat surface and an orthogonal relative coordinate system having a reference position O as a center where the workpiece W is to be placed is defined as shown in Fig. 3, the workpiece placement range RA is designated by designating points P1 to P4 of which the coordinates are farthest from the origin (i.e. the reference position O) on the X and Y axes of the relative coordinate system. The points P1 to P4 may be designated by inputting their coordinate values or by actually moving the robot hand 14 to the points described above. In Fig. 3, the XY plane of the orthogonal coordinate system is divided into four areas partitioned by X and Y axes. Nevertheless, the designation and division of the workpiece placement range RA can be performed by another method. In the case where the workpiece placement range RA is steric, at least six points farthest from the origin on the X, Y and Z axes may be designated.

Next, for the divided areas R1 to R4, the path patterns PT1 to PT4 respectively suitable for reducing a wastful operation of the robot hand 14 are designated while avoiding the interference between the robot hand 14 and other objects. These path patterns PT1 to PT4 are related to the divided areas R1 to R4, respectively and stored in the path pattern storage means 20 (step S102). As shown in Fig. 3, for example, for each of the four divided areas R1 to R4, an arbitrary point is predetermined as a representative position for defining a path pattern and, on the assumption that the predetermined representative position is coincident with a target position, a path pattern PT1,..., PT4 including an approaching path along which the robot hand 14 approaches the target position and a leaving path along which the robot hand 14 leaves or moves away from the target position are defined. Each of the divided areas R1 to R4 is related to a corresponding one of the path patterns PT1 to PT4. Fig. 3 shows workpieces W1 to W4 arranged at the representative positions of the divided areas R1 to R4, path patterns PT11, PT2 to PT4 defined as the approaching paths along which the robot hand 14 approaches the representative positions of the divided areas R1 to R4 and path patterns PT12, PT2 to PT4 defined as the leaving paths along which the robot hand 14 leaves or moves away from the representative positions of the divided areas R1 to R4. In most cases, as in the path patterns PT2 to PT4, the same path pattern is set as the approaching path and the leaving path. However, if it is desirable to move the robot hand 14 along different paths when approaching and leaving the representative position depending on the shape, etc. of the workpiece W, different path patterns PT11, PT12 may be set as the approaching path and the leaving path, as for the path pattern PT1 shown in Fig. 3.

The term "target position" used in this application is defined, for sake of explanation, as a position where the workpiece W is arranged or should be arranged, and indicates an end point for the approaching path and a start point for the leaving path.

As the scope of each area to be examined is reduced by dividing the workpiece placement range RA into a plurality of areas in this way, the path capable of avoiding the interference can be examined easily, while at the same time making it easier to relate the actual workpiece position and the path pattern to be selected to each other.

In the case where the path pattern is defined as a nonlinear path as shown in Fig. 3, the path patterns PT1 to P4 are defined by designating the coordinates of the start point, the end point and at least one via-point between the starting and end points and connecting the designated points by axial interpolation, linear interpolation or circular interpolation. However, in the case where the path pattern is designated as a straight path, the path pattern can be defined by designating only the coordinates of the starting and end points as teaching points. The coordinate of each point may be designated by a command in the operation program or by an input from the operating panel. Alternatively, the coordinate of each point may be designated by enabling the robot arm 12 and the robot hand 14 to be freely moved in a manual mode and moving the robot hand 4 to the desired position, at which the input operation is performed automatically based on information from movement axes of the robot mechanical part or the visual sensor 18.

Next, once the workpiece W is placed on the workpiece placement surface 22, the position of the workpiece W is detected by the visual sensor 14. Specifically, the image information of the workpiece W placed on the workpiece placement surface 22 is actually obtained by the imaging unit 18a provided on the robot hand 14, the obtained image information is transmitted through the signal transmission means 18c to the image processing unit 18b where the position of the workpiece W is detected by image processing (step S104). In the process, the position coordinate of the workpiece W may be detected in an absolute coordinate system. Alternatively, the position of the workpiece W may be detected relative to the workpiece W0 which is assumed to be arranged at the reference position O on the workpiece placement surface 22 or may be detected in the relative coordinate system of the workpiece placement range RA. When the robot controller 16 receives the information on the detected position of the workpiece W, it checks whether or not the position of the workpiece W is within the workpiece placement range RA (step S106). Specifically, in the case where the value of each position coordinate of the workpiece W is included in a range between the maximum and minimum values of the corresponding coordinate axis designated when the workpiece placement range RA is designated, it is judged that the workpiece W is arranged in the workpiece placement range RA.

When the robot controller 16 judges that the workpiece W is arranged in the workpiece placement range RA, it selects, from the plurality of path patterns PT1 to PT4 stored in the path pattern storage means 20, one path pattern related to one of the divided areas R1 to R4 in which the detected position of the workpiece W is included (step S108). However, as the selected path pattern PT1...PT4 is defined on the assumption that a target position thereof is coincident with the representative position in one of the divided areas R1 to R4 in which the position of the workpiece W is included, the position of the workpiece W is normally not coincident with the target position. As a result, when the selected one of the path patterns PT1 to PT4 is directly used as an approaching path, the robot hand 14 cannot be accurately moved to the actual position of the workpiece W. Therefore, in accordance with the detected position of the workpiece W, the selected one of the path patterns PT1 to PT4 is modified (step S110).

The selected one of the path patterns PT1 to PT4 can be modified, for example, by calculating the coordinates of the actual position of the workpiece W relative to the representative position of one of the divided areas R1 to R4 in which the position of the workpiece W is included, based on the coordinates of the workpiece position detected by the visual sensor and the known coordinates of the representative position, and moving the selected one of the path patterns PT1 to PT4 in parallel so that the target position (i.e. the end point of the approaching path or the start point of the leaving path) of the selected one of the path patterns PT1 to PT4 is coincident with the position of the workpiece W, more specifically, adding the relative coordinate values of the position of the workpiece W relative to the representative position to the coordinate values of the start point, the end point and the via-point defining the selected one of the path patterns PT1 to PT4 to thereby correct the coordinates of all the teaching points, i.e. the start point, the end point and the via-point of the selected one of the path patterns PT1 to PT4. This equally applies to the case in which the same path pattern is used for the approaching path and the leaving path (PT2 to PT4) and the case in which different path patterns are used for the approaching path and the leaving path (PT1; PT11; PT12). By using the modified path pattern PT1; ...; PT4 as the approaching path or the leaving path in this manner, the approaching path or the leaving path suitable for the position of the workpiece W can be defined. As a result, a wastful operation of the robot hand 14 can be reduced while avoiding interference between the robot hand 14 and other objects. In addition, if the selected path pattern moved in parallel is defined as the approaching path or the leaving path in this manner, the direction in which the workpiece is approached and the direction in which the workpiece is left can be determined based on the actual workpiece position, to thereby make it easier to define the path so as to avoid the interference with other objects.

As an alternative to modifying the selected path pattern PT1 to PT4, the selected path pattern PT11, PT2 to PT4 for the approaching path may be modified such that only the coordinate of the end point among the teaching points defining the path pattern PT11, PT2 to PT4 is corrected to be coincident with the coordinate of the position of the workpiece W. Also in this case, as the selected path pattern PT11, PT2 to PT4 is defined as an approaching path suitable for one of the divided areas R1 to R4 in which the workpiece W is placed, a wastful operation of the robot hand 14 can be reduced. Similarly, the selected path pattern PT12, PT2 to PT4 for the leaving path is modified such that only the coordinate of the start point among the teaching points defining the path pattern PT12, PT2 to PT4 is corrected to be coincident with the coordinate of the position of the workpiece W. This equally applies to the case in which the same path pattern is used for the approaching path and the leaving path (PT2 to PT4) and the case in which a different path patterns are used for the approaching path and the leaving path (PT1; PT11; PT12).

After modifying the selected one of the plurality of the path patterns PT1 to PT4 stored in the path pattern storage means 20 in this way, the robot controller 16 sets the modified one of the path patterns PT1 to PT4 as an approaching path or a leaving path to move the robot hand 14 along the approaching or leaving path thus set (step S112). When the operation cycle for one workpiece W is completed, the process returns to step S104, at which a similar operation will be repeated for the next workpiece W.

On the other hand, in the case where it is judged at step S106 that the position of the workpiece W is not included in the workpiece placement range R, i.e. in the case where any one of the position coordinates of the workpiece W is not included in a range between the maximum and minimum values of the corresponding coordinate axis designated when the workpiece placement range RA is designated, the robot controller 16 judges that the robot hand 14 or the workpiece W held thereby can interfere with other objects, and issues an alarm to stop the execution of the operation program and thereby stop the operation of the robot hand 14. This case means that the workpiece W is displaced from the reference position O on the workpiece placement surface 22 beyond a tolerance and the operation on the upstream side may cause a fault. Therefore, the operator is required to check the system. As a result, the robot hand is prevented from moving in an area for which the possibility of interference has not been checked, thereby preventing actual interference from occurring.

According to the robot controller described above, a path pattern reducing a wastful operation of the robot hand 14 while avoiding the interference with other objects can be selected from a plurality of the path patterns stored in the path pattern storage means 20 in accordance with the actual workpiece position. Thus, a suitable approaching path and a suitable leaving path can be defined in accordance with the position of the workpiece W, and as a result, the cycle time can be reduced.

Although the robot controller 16 and the robot system 10 using the same have been described above with reference to the shown embodiments, they are not limited to the embodiments shown. In the embodiments described above, for example, when the path patterns PT1 to PT4 are related to the areas R1 to R4 into which the workpiece placement range RA is divided, they are defined on the assumption that each of the representative positions thereof selected in the divided areas R1 to R4 to define the path patterns PT1 to PT4 is coincident with a target position. However, the path patterns PT1 to PT4 are not necessarily designated in accordance with the above method. For example, the path patterns PT1 to PT4 can alternatively be designated on the assumption that the position of the workpiece W arranged at the reference position O on the workpiece placement surface 22, i.e. the origin of the relative coordinate system is coincident with a target position. However, in this case, in order to reduce a wastful operation of the robot hand 14, the selected one of the path patterns PT1 to PT4 is preferably modified, based on the detected position of the workpiece W, by moving the selected one of the path patterns PT1 to PT4 in parallel so that the target position of the selected one of the path patterns PT1 to PT4 is coincident with the position of the workpiece W, more specifically, by adding the relative coordinate values of the position of the workpiece W relative to the representative position of the corresponding area R1;...;R4 to the coordinate values of the start point, the end point and the via-point defining the selected one of the path patterns PT1 to PT4 to thereby correct the start point, the end point and the via-point of the selected one of the path patterns PT1 to PT4.

## Claims

1. A robot controller (16) for correcting a target position of a robot hand (14) based on a position of a workpiece (W) detected by a visual sensor (18) to thereby move said robot hand (14) toward or away from said workpiece (W), said robot controller **characterized by** comprising:
a path pattern storage means (20) for storing a plurality of path patterns (PT1 to PT4) including an approaching path along which said robot hand (14) approaches a specific target position and a leaving path along which said robot hand (14) leaves the specific target position, said specific target position being predetermined in order to define the approaching path and the leaving path for said robot hand (14),
wherein said robot controller selects one of the plurality of path patterns stored in said path pattern storage means (20), based on the position of said workpiece (W) detected by said visual sensor (18), modifies the selected path pattern so that the target position of said robot hand (14) is coincident with the position of the workpiece (W) detected by said visual sensor (18), defining the modified path pattern as revised approaching and leaving paths, and moves said robot hand (14) along the revised approaching and leaving paths.

2. The robot controller according to claim 1, defining, as the revised approaching path and the revised leaving path, the selected path pattern moved in parallel so that the target position of said robot hand (14) is coincident with the position of the workpiece (W) detected by said visual sensor (18).

3. The robot controller according to claim 1 or 2,
wherein a range (RA) in which said workpiece is allowed to be placed is divided into a plurality of areas (R1 to R4), and the path pattern is selected depending on in which of the plurality of areas (R1 to R4) the position of said workpiece (W) detected by said visual sensor (18) is included.

4. The robot controller according to claim 1,
wherein the approaching path and the leaving path for one workpiece (W) are identical.

5. The robot controller according to claim 1,
wherein when at least one of the coordinate values of the position of said workpiece (W) detected by said visual sensor (18) exceeds a predetermined threshold value, said robot controller (16) issues an alarm and stops an operation of said robot hand (14).

6. The robot controller according to claim 1,
wherein the approaching path and the leaving path are defined by designating a start point and an end point and connecting the designated starting and end points by interpolation.

7. The robot controller according to claim 1,
wherein the approaching path and the leaving path are defined by designating a start point, an end point and at least one via-point between the start point and the end point and connecting the designated points by interpolation.

8. The robot controller according to any one of claims 1 to 7, wherein the position of said workpiece (W) detected by said visual sensor (18) is represented as a position of said workpiece relative to a predetermined reference position.
